# EUROPÄISCHE PATENTSCHRIFT

(11) **EP 1 193 611 B1**
(45) Veröffentlichungstag und Bekanntmachung des Hinweises auf die Patenterteilung: **16.07.2008**
(21) Anmeldenummer: 01123129.7
(22) Anmeldetag: 27.09.2001
(51) Int. Cl.: G06F 13/36, G06F 13/42

(54) **Multiprozessor-Anordnung**
Multiprocessor configuration
Système multiprocesseur

(30) Priorität: 29.09.2000 DE 10048732
(43) Veröffentlichungstag der Anmeldung: 03.04.2002
(73) Patentinhaber: NXP B.V., 5656 AG Eindhoven (NL)
(72) Erfinder: Hertwig, Axel, Habsburgerallee 11, 52064 Aachen (DE); Mehling, Rainer, Habsburgerallee 11, 52064 Aachen (DE); Koch, Stefan, Habsburgerallee 11, 52064 Aachen (DE)
(74) Vertreter: van der Veer, Johannis Leendert

(56) Entgegenhaltungen:
- WO-A-00/43895
- WO-A-96/35996
- WO-A-99/30243

## Beschreibung

Die Erfindung betrifft eine Multiprozessor-Anordnung, bei der mehrere Prozessoren asynchron auf eine gemeinsame Peripherie-Einheit zugreifen können.

Es ist bekannt, dass mehrere Prozessoren, die auf eine gemeinsame Peripherie-Einheit zugreifen sollen, mit dieser über einen Bus verbunden sind. Zugriffe auf den Bus bedürfen einer Arbitrierung zwischen den Prozessoren. Eine derartige Anordnung ist in der Implementierung aufwendig und im Betrieb wenig effizient. Insbesondere ist der Zeitaufwand für einen Zugriff nicht mehr deterministisch.

Das Dokument WO 96/35996 offenbart eine Schnittstelle zwischen Clock-Domains mit integrierten Registern.

Der Erfindung liegt die Aufgabe zugrunde, eine Multiprozessor-Anordnung zu schaffen, bei der mehrere Prozessoren möglichst einfach auf eine gemeinsame Peripherie-Einheit zugreifen können.

Die Aufgabe wird durch die Merkmale des Anspruches 1 gelöst. Der Kern der Erfindung besteht darin, innerhalb der Clock-Domain eines jeweiligen Prozessors eine Schattenregister-Einheit vorzusehen, die identisch zu der Register-Einheit der Peripherie-Einheit ausgebildet ist. Hierdurch kann die Übertragung der relevanten Daten vom Prozessor an die Peripherie-Einheit ohne Synchronisation zu einer anderen Clock-Domain wie auch ohne jegliche Arbitrierung erfolgen.

Weitere vorteilhafte Ausgestaltungen der Erfindung ergeben sich aus den Unteransprüchen.

Zusätzliche Merkmale und Einzelheiten der Erfindung ergeben sich aus der Beschreibung eines Ausführungsbeispiels anhand der Zeichnung. Es zeigt:

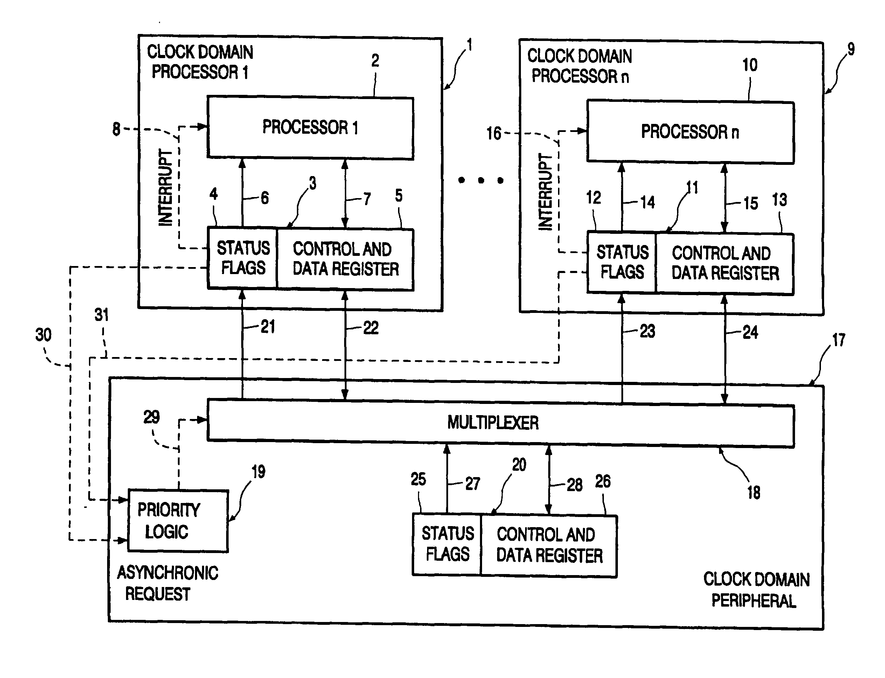

- Fig. 1: eine schematische Darstellung einer erfindungsgemäßen Multiprozessor Anordnung.

Eine Multiprozessor-Anordnung weist eine innerhalb einer ersten Clock-Domain, d.h. Taktgeber-Domäne, arbeitende erste Prozessor-Schattenre-gister-Einheit 1 mit einem ersten Prozessor 2 und einer ersten Schattenregister-Einheit 3 auf. Die Schattenregister-Einheit 3 besteht ihrerseits aus Status-Flags 4 sowie Kontroll-/Daten-Registern 5, die über Datenübertragungsleitungen 6 bzw. 7 mit dem Prozessor 2 verbunden sind. Die Status-Flags 4 können beim Prozessor 2 ein Interrupt 8 auslösen.

Ferner ist eine innerhalb einer zweiten Clock-Domain arbeitende zweite Prozessor-Schattenregister-Einheit 9 vorgesehen, welche analog zur ersten Prozessor-Schattenregister-Einheit 1 aufgebaut ist und einen Prozessor 10, eine zweite Schattenregister-Einheit 11 mit Status-Flags 12 und Kontroll-/Daten-Registern 13 mit Datenübertragungsleitungen 14 bzw. 15 aufweist. Die Status-Flags 12 sind über ein Interrupt 16 mit dem Prozessor 10 verbunden. Es können eine Reihe weiterer Prozessor-Schattenregister-Einheiten analogen Aufbaus vorgesehen sein. Ferner ist es möglich, mehrere Prozessoren und zugehörige Prozessor-Schattenregister-Einheiten in derselben Clock-Domain vorzusehen. Die Multiprozessor-Anordnung kann selbstverständlich auch nur mit einer einzigen Prozessor-Schattenregister-Einheit ausgestattet sein.

Die Multiprozessor-Anordnung weist ferner eine innerhalb einer Peripherie-Clock-Domain arbeitende Peripherie-Einheit 17 mit einer Multiplexer-Einheit 18, einer Prioritäts-Einheit 19 sowie einer Register-Einheit 20 auf. Bei der Peripherie-Einheit 17 kann es sich um eine Infrarot-Schnittstelle, eine UART-Schnittstelle (Universal Asynchronus Receiver Transmitter) oder eine USB-Schnittstelle (Universal Serial Bus) handeln. Die Multiplexer-Einheit 18 ist mit Datenübertragungsleitungen 21 und 22 mit den Status-Flags 4 bzw. den Kontroll-/Daten-Registern 5 verbunden. Ferner ist die Multiplexer-Einheit 18 über Datenübertragungsleitungen 23 und 24 mit den Status-Flags 12 und den Kontroll-/Daten-Registern 13 verbunden. Sofern weitere Prozessor-Schattenregister-Einheiten vorgesehen sind, so ist die Multiplexer-Einheit 18 auch mittels weiterer Datenübertragungsleitungen mit den entsprechenden Schattenregistern verbunden. Die Register-Einheit 20 weist Status-Flags 25 sowie Kontroll-/Daten-Register 26 auf, die über Datenübertragungsleitungen 27 bzw. 28 mit der Mulitplexer-Einheit 18 verbunden sind. Die Schattenregister-Einheiten 3 und 11 sowie die möglicherweise weiteren Schattenregister-Einheiten weisen den identischen Aufbau wie die Register-Einheit 20 auf. Zumindest ist der Aufbau funktionsidentisch. Die Prioritäts-Einheit 19 ist über eine Datenübertragungsleitung 29 mit der Multiplexer-Einheit 18 verbunden und gibt auf diese entsprechende Steuersignale. Die Status-Flags 4 und 12 sind über Anfrage-Leitungen 30 bzw. 31 mit der Prioritäts-Einheit 19 verbunden.

Im folgenden wird der Betrieb der Multiprozessor-Anordnung beschrieben. Möchte der Prozessor 2 die Peripherie-Einheit 17 benutzen und dafür die Register-Einheit 20 beschreiben, so beschreibt er zunächst das in seiner Clock-Domain liegende identische Schattenregister 3. Beim Beschreiben des Schattenregisters 3 treten keine Synchronisationsprobleme auf, da das Schattenregister 3 in derselben Clock-Domain liegt, wie der erste Prozessor 2. Ferner entstehen keine Konflikte mit den anderen Prozessoren. Durch das Beschreiben des Schattenregisters 3 ist die Kommunikation mit der Peripherie für den Prozessor 2 beendet. Mögliche Ergebnisse oder der Abschluss der auf die Peripherie-Einheit 17 zu übertragenden Aufgabe wird dem Prozessor 2 später über einen Interrupt 8 mitgeteilt.

Gleichzeitig zu Prozessor 2 können weitere Prozessoren, z.B. Prozessor 10, ähnliche Anfragen an die ihnen zugeordnete Schattenregister-Einheit 11 richten. Die Prozessoren 2 und 10 können somit unabhängig voneinander und asynchron zueinander arbeiten. Der Zugriff auf die Schattenregister-Einheiten 3 und 11 steht unter der vollen Kontrolle des zugeordneten Prozessors 2 bzw. 10.

Nachdem Änderungen in der Schattenregister-Einheit 3 vorgenommen worden sind, wird dies über die asynchrone Anfrageleitung 30 der Prioritäts-Einheit 19 mitgeteilt. Die Prioritäts-Einheit 19 entscheidet nach nachfolgend genauer erläuterten Prioritäts-Kriterien, welche Anfrage als nächste zu bearbeiten ist. Erhält der Prozessor 2 den Zuschlag, so steuert die Prioritäts-Einheit 19 über die Leitung 29 die Multiplexer-Einheit 18 in der Weise an, dass der Inhalt der Schattenregister-Einheit 3 über die Leitungen 21 und 22 durch die Multiplexer-Einheit 18 ausgelesen wird. Da bei dem Lesevorgang statische Daten in der Schattenregister-Einheit 3 ausgelesen werden, spielt es keine Rolle, dass die erste Clock-Domain der Prozessor-Schattenregister-Einheit 1 und die Peripherie-Clock-Domain nicht aufeinander abgestimmt sind. Die Übertragung der Daten kann somit asynchron erfolgen. Die aus der Schattenregister-Einheit 3 ausgelesenen Daten werden in die Register-Einheit 20 kopiert. Nun führt die Peripherie-Einheit 17 die ihr zugeteilte Aufgabe aus. Hier werden beispielsweise Daten über eine Infrarot-Schnittstelle nach außen übertragen. Währenddessen bearbeitet die Prioritäts-Einheit 19 keine weiteren Anfragen. Wenn die Peripherie-Einheit 17 die Aufgabe abgearbeitet hat, werden entsprechende Datenergebnisse und Statusinformationen an die entsprechende Schattenregister-Einheit 3 zurückgegeben. Die Peripherie-Einheit 17 befindet sich nun wieder im Leerlauf und die Prioritäts-Einheit 19 kann die nächste Anfrage auswählen. Sobald die Datenergebnisse und Statusinformationen von der Peripherie-Einheit 17 in die Schattenregister-Einheit 3 kopiert worden sind, kann ein Interrupt 8 ausgelöst werden, um den Prozessor 2 von der Fertigstellung seiner Anfrage zu informieren.

Die über die Anfrageleitungen 30 bzw. 31 übertragenen Anfrage-Signale sind als Ein-Bit-Signal kodiert. Dies hat den Vorteil, dass es bei dem Senden eines Anfrage-Signales von der Schattenregister-Einheit 3 oder 11 an die Prioritäts-Einheit 19 auf eine Synchronisation der verschiedenen Clock-Domains nicht ankommt. Somit kann das Anfragesignal asynchron übertragen werden.

Für die Prioritäts-Einheit 19 bestehen verschiedene Möglichkeiten, um den verschiedenen Prozessoren 2 und 10 Prioritäten zuzuteilen. Es kann zum einen danach verfahren werden, dass gilt: Wer zuerst kommt, mahlt zuerst. Hierbei wird die Anfrage des Prozessors als nächste bearbeitet, der sie als nächster stellt. Ferner können die Prozessoren der Reihe nach abgearbeitet werden, d.h. auf den Prozessor 2 folgt der Prozessor 10 und alle möglichen weiteren mit der Peripherie-Einheit 17 verbundenen Prozessoren. Darüber hinaus besteht die Möglichkeit, den Prozessoren verschiedene Prioritäten zuzuordnen. Hiernach würde z.B. Prozessor 2 gegenüber Prozessor 10 immer bevorzugt. Die Prioritäten können auch statistisch verteilt werden. So könnte Prozessor 2 z.B. 60 % der Zeit und Prozessor 10 40 % der Zeit zugeordnet werden. Darüber hinaus kann entweder für jeden Zugriff eine Neuzuteilung erfolgen oder aber eine Neuzuteilung nur nach expliziter Freigabe einer Zuteilung erfolgen. Im letzteren Fall wäre eine Blockverarbeitung möglich. Alternativ zu einem Interrupt nach der Abarbeitung der Aufgabe kann auch regelmäßig der Status durch den entsprechenden Prozessor, was als Polling bezeichnet wird, überprüft werden.

Vorteilhaft an der Multiprozessor-Anordnung ist, dass jeweils ein Prozessor ohne Konflikt mit anderen Prozessoren auf eine gemeinsame Peripherie-Einheit zugreifen kann. Auf diese Weise kann eine Busarbitrierung, die zeitaufwendig ist, vermieden werden und die Auslastung der Peripherie-Einheit maximiert werden. Die Taktversorgung der einzelnen Prozessoren sowie der Peripherie-Einheit kann getrennt bleiben.

## Patentansprüche

1. Multiprozessor-Anordnung mit
a) einer innerhalb einer ersten Clock-Domain arbeitenden ersten Prozessor-Schattenregister-Einheit (1), welche aufweist
i) einen ersten Prozessor (2) und
ii) eine erste Schattenregister-Einheit (3), die mit dem ersten Prozessor (2) in datenübertragender Weise verbunden ist,
b) mindestens einer zweiten Prozessor-Schattenregister-Einheit (9), welche
i) innerhalb einer entsprechenden zweiten Clock-Domain arbeitet,
ii) einen zweiten Prozessor (10) aufweist und
iii) eine zweite Schattenregister-Einheit (11) aufweist, die mit dem zweiten Prozessor (10) in datenübertragender Weise verbunden ist, und
c) einer innerhalb einer Peripherie-Clock-Domain arbeitenden Peripherie-Einheit (17), welche aufweist
i) eine Multiplexer-Einheit (18), welche in datenübertragender Weise mit der ersten Schattenregister-Einheit (3) und der mindestens zweiten Schattenregister-Einheit (11) verbunden ist,
ii) eine Register-Einheit (20), wobei die erste Schattenregister-Einheit (3) und die mindestens zweite Schattenregister-Einheit (11) und die Register-Einheit (20) funktions-identisch ausgebildet sind, und
iii) eine Prioritäts-Einheit (19) zur Zuweisung der Multiplexer-Einheit (18) zur Datenübertragung an die erste Schattenregister-Einheit (3) oder die mindestens zweite Schattenregister-Einheit (11), wobei die Prioritäts-Einheit (19) mit der ersten Schattenregister-Einheit (3) und der mindestens zweiten Schattenregister-Einheit (11) in datenübertragender Weise verbunden ist.

2. Multiprozessor-Anordnung gemäß Anspruch 1,
**dadurch gekennzeichnet,**
**dass** die erste Schattenregister-Einheit (3), die mindestens zweite Schattenregister-Einheit (11) und die Register-Einheit (20) Status-Flags sowie Kontroll-/Datenregister aufweisen.

3. Multiprozessor-Anordnung gemäß Anspruch 1 oder 2,
**dadurch gekennzeichnet,**
**dass** die erste Clock-Domain und/oder die mindestens zweite Clock-Domain mehr als einen Prozessor aufweisen.

4. Multiprozessor-Anordnung gemäß einem der vorangehenden Ansprüche,
**dadurch gekennzeichnet,**
**dass** die Multiplexer-Einheit (18) zum Auslesen von Daten aus der ersten Schattenregister-Einheit (3) und/
oder der mindestens zweiten Schattenregister-Einheit (11) in Leserichtung mit diesen verbunden ist.

5. Multiprozessor-Anordnung gemäß einem der vorangehenden Ansprüche,
**dadurch gekennzeichnet,**
**dass** Zugriffsanfragen von der ersten Schattenregister-Einheit (3) und/oder der mindestens zweiten Schattenregister-Einheit (11) an die Prioritäts-Einheit (19) als Ein-Bit-Signal kodiert sind.

6. Multiprozessor-Anordnung gemäß einem der vorangehenden Ansprüche,
**dadurch gekennzeichnet,**
**dass** die Prioritäts-Einheit (19) der ersten Schattenregister-Einheit (3) oder der mindestens zweiten Schattenregister-Einheit (11) den Vorzug gibt nach dem Prinzip: Wer zuerst kommt, mahlt zuerst.

7. Multiprozessor-Anordnung gemäß einem der Ansprüche 1 bis 5,
**dadurch gekennzeichnet,**
**dass** die Prioritäts-Einheit (19) der ersten Schattenregister-Einheit (3) oder der mindestens zweiten Schattenregister-Einheit (11) den Vorzug gibt nach dem Prinzip: Alle Schattenregister-Einheiten (3, 11) kommen nacheinander dran.

8. Multiprozessor-Anordnung gemäß einem der Ansprüche 1 bis 5,
**dadurch gekennzeichnet,**
**dass** die Prioritäts-Einheit (19) der ersten Schattenregister-Einheit (3) oder der mindestens zweiten Schattenregister-Einheit (11) den Vorzug gibt nach dem Prinzip: Jede Schattenregister-Einheit erhält statistisch einen gewissen Prozentsatz der Zeit zum Zugriff auf die Peripherie-Einheit (17).

9. Multiprozessor-Anordnung gemäß einem der vorangehenden Ansprüche,
**dadurch gekennzeichnet,**
**dass** die Peripherie-Einheit (17) als Infrarot-Schnittstelle, UART-Schnittstelle oder USB-Schnittstelle, ausgebildet ist.

10. Multiprozessor-Anordnung gemäß einem der vorangehenden Ansprüche,
**dadurch gekennzeichnet,**
**dass** die erste Schattenregister-Einheit (3) und/oder die mindestens zweite Schattenregister-Einheit (11) über einen Interrupt (8, 16) mit dem zugehörigen Prozessor (2, 10) verbunden sind.

## Claims

1. A multiprocessor array which includes
a) a first processor shadow register unit (1) which operates within a first clock domain and includes
i) a first processor (2), and
ii) a first shadow register unit (3) which is connected to the first processor (2) so as to transmit data,
b) at least one second processor shadow register unit (9) which
i) operates within a corresponding second clock domain,
ii) includes a second processor (10), and
iii) includes a second shadow register unit (11) which is connected to the second processor (10) so as to transmit data, and
c) a peripheral unit (17) which operates within a peripheral clock domain and includes
i) a multiplexer unit (18) which is connected to the first shadow register unit (3) and the at least one second shadow register unit (11) so as to transmit data,
ii) a register unit (20), the construction of the first shadow register unit (3) and the at least one second shadow register unit (11) and the register unit (20) being identical in respect of function, and
iii) a priority unit (19) for allocating the multiplexer unit (18) for data transmission to the first shadow register unit (3) or to the at least one second shadow register unit (11), the priority unit (19) being connected so as to transmit data to the first shadow register unit (3) and to the at least one second shadow register unit (11).

2. A multiprocessor array as claimed in claim 1, **characterized in that** the first shadow register unit (3), the at least one second shadow register unit (11) and the register unit (20) include status flags as well as control and data registers.

3. A multiprocessor array as claimed in claim 1 or 2, **characterized in that** the first clock domain and/or the at least one second clock domain include more than one processor.

4. A multiprocessor array as claimed in any one of the preceding claims, **characterized in that** for reading out data from the first shadow register unit (3) and/or the at least one second shadow register unit (11) the multiplexer unit (18) is connected thereto in the read out direction.

5. A multiprocessor array as claimed in any one of the preceding claims, **characterized in that** requests for access from the first shadow register unit (3) and/or the at least one second shadow register unit (11) to the priority unit (19) are encoded as one-bit signals.

6. A multiprocessor array as claimed in any one of the preceding claims, **characterized in that** the priority unit (19) grants priority to the first shadow register unit (3) or to the at least one second shadow register unit (11) in conformity with the principle: first-come, first-served.

7. A multiprocessor array as claimed in any one of the claims 1 to 5, **characterized in that** the priority unit (19) grants priority to the first shadow register unit (3) or to the at least one second shadow register unit (11) in conformity with the principle: all shadow register units (3, 11) are served successively.

8. A multiprocessor array as claimed in any one of the claims 1 to 5, **characterized in that** the priority unit (19) grants priority to the first shadow register unit (3) or to the at least one second shadow register unit (11) in conformity with the principle: each shadow register unit is statistically allocated a given percentage of the time for accessing the peripheral unit (17).

9. A multiprocessor array as claimed in any one of the preceding claims, **characterized in that** the peripheral unit (17) is constructed as an infrared interface, UART interface or USB interface.

10. A multiprocessor array as claimed in any one of the preceding claims, **characterized in that** the first shadow register unit (3) and/or the at least one second shadow register unit (11) are connected to the associated processor (2, 10) via an interrupt (8, 16).

## Revendications

1. Dispositif de multiprocesseur avec
a) une première unité de registre en double-processeur (1) fonctionnant à l'intérieur d'un premier domaine d'horloge, lequel présente
i) un premier processeur (2) et
ii) une première unité de registre en double (3) qui est reliée au premier processeur (2) dans un mode de transmission de données,
b) au moins une seconde unité de registre en double-processeur (9) qui
i) fonctionne à l'intérieur d'un second domaine horloge correspondant,
ii) comporte un second processeur (10) et
iii) présente une seconde unité de registre en double (11) qui est raccordée au second processeur (10) en mode de transmission de données, et
c) une unité périphérique (17) fonctionnant à l'intérieur d'un domaine horloge-périphérie qui comporte
i) une unité de multiplexeur (18) qui est raccordée en mode de transmission de données avec la première unité de registre en double (3) et la au moins seconde unité de registre en double (11),
ii) une unité de registre (20), de telle sorte que la première unité de registre en double (3) et la au moins seconde unité de registre en double (11) et l'unité de registre (20) soient configurées de façon identique du point de vue fonctionnel, et
iii) une unité de priorité (19) pour l'affectation de l'unité multiplexeur (18) pour la transmission de données à la première unité de registre en double (3) ou à la au moins seconde unité de registre en double (11), tandis que l'unité de priorité (19) est raccordée à la première unité de registre en double (3) et à la au moins seconde unité de registre en double (11) en mode de transmission de données.

2. Dispositif multiprocesseur selon la revendication 1,
**caractérisé en ce que**
la première unité de registre en double (3), la au moins seconde unité de registre en double (11) et l'unité de registre (20) présentent des drapeaux d'état ainsi qu'un registre de données/contrôle.

3. Système multiprocesseur selon la revendication 1 ou 2,
**caractérisé en ce que**
le premier domaine horloge et/ou le au moins second domaine d'horloge comportent plus d'un seul processeur.

4. Système multiprocesseur selon l'une des revendications précédentes,
**caractérisé en ce que**
l'unité multiplexeur (18) est raccordée pour la lecture de données provenant de la première unité de registre en double (3) et/ou
est raccordée à la au moins seconde unité de registre en double (11) avec celles-ci dans la direction lecture.

5. Système de multiprocesseur selon l'une des revendications précédentes,
**caractérisé en ce que**
les demandes d'accès provenant de la première unité de registre en double (3) et/ou de la au moins seconde unité de registre en double (11) sont codées à l'unité de priorité (19) en tant que signal un bit.

6. Système multiprocesseur selon l'une des revendications précédentes,
**caractérisé en ce que**
l'unité de priorité (19) de la première unité de registre en double (3) ou de la au moins seconde unité de registre en double (11) donne la priorité selon le principe : premier venu, premier servi.

7. Système multiprocesseur selon l'une des revendications 1 à 5,
**caractérisé en ce que**
l'unité de priorité (19) de la première unité de registre en double (3) ou de la au moins seconde unité de registre en double (11) donne la priorité selon le principe : toutes les unités de registre en double (3, 11) sont traitées de façon consécutive.

8. Système multiprocesseur selon l'une des revendications 1 à 5,
**caractérisé en ce que**
l'unité de priorité (19) de la première unité de registre en double (3) ou de la au moins seconde unité de registre en double (11) donne la priorité selon le principe : chaque unité de registre en double reçoit statistiquement un certain pourcentage de temps pour l'accès à l'unité périphérique (17).

9. Système multiprocesseur selon l'une des revendications précédentes,
**caractérisé en ce que**
l'unité périphérique (17) est configurée en tant qu'interface infrarouge, interface UART ou interface USB.

10. Système multiprocesseur selon l'une des revendications précédentes,
**caractérisé en ce que**
la première unité de registre en double (3) et/ou la au moins seconde unité de registre en double (11) sont raccordées par l'intermédiaire d'une interruption (8, 16) au processeur correspondant (2, 10).
